# EUROPÄISCHE PATENTSCHRIFT

(11) **EP 3 124 742 B1**
(45) Veröffentlichungstag und Bekanntmachung des Hinweises auf die Patenterteilung: **07.11.2018**
(21) Anmeldenummer: 15178652.2
(22) Anmeldetag: 28.07.2015
(51) Int. Cl.: F01D 5/08, F01D 5/06

(54) **GASTURBINE**
GAS TURBINE
TURBINE A GAZ

(43) Veröffentlichungstag der Anmeldung: 01.02.2017
(73) Patentinhaber: MTU Aero Engines AG, 80995 München (DE)
(72) Erfinder: Pirker, Klaus, St. Lambert, QC, J4R2V3 (CA); Lauer, Christoph, 80637 München (DE)

(56) Entgegenhaltungen:
- EP-A1- 1 785 588
- EP-A2- 2 011 966
- WO-A2-2008/141609
- US-A- 5 232 339
- US-A1- 2015 096 304

## Beschreibung

Die vorliegende Erfindung betrifft eine Gasturbine, insbesondere eine Flugtriebwerk-Gasturbine, sowie ein Verfahren zum Betreiben einer Gasturbine. Eine Gasturbine nach dem Oberbegriff von Anspruch 1 ist bereits aus der US 2015/096304 A1 bekannt.

Aus der eigenen WO 2008/141609 A2 ist eine Gasturbine mit einer Welle und einem damit verbundenen beschaufelten Turbinenrotor bekannt, der einen ersten Rotorabschnitt, der ein stromabwärtigstes Laufgitter des Turbinenrotors aufweist, und einen dem ersten Rotorabschnitt axial benachbarten zweiten Rotorabschnitt aufweist, der ein zweites Laufgitter des Turbinenrotors aufweist und einen zweiten Raum in radialer Richtung begrenzt, der mit Kühlluft beschickt wird.

Nach der WO 2008/141609 A2 ist es bei einer solchen Gasturbine bekannt, zusätzlich Sperrluft durch eine in der Welle angeordnete erste Gaspassage stromabwärts des stromabwärtigsten Laufgitters zwischen Turbinenrotor und Turbinenaustrittsgehäuse auszublasen.

Der Vollständigkeit halber sei auch noch auf die Druckschriften EP 1 785 588 A1. EP 2 011 966 A2 und US 5 232 339 A hingewiesen.

Eine Aufgabe einer Ausführung der vorliegenden Erfindung ist es, eine Gasturbine bzw, deren Betrieb zu verbessern.

Diese Aufgabe wird durch eine Gasturbine mit den Merkmalen des Anspruchs 1 bzw. ein Verfahren mit den Merkmalen des Anspruchs 9 gelöst. Vorteilhafte Ausführungsformen der Erfindung sind Gegenstand der Unteransprüche.

Nach einem Aspekt der vorliegenden Erfindung weist eine Gasturbine, insbesondere eine Flugtriebwerk-Gasturbine, wenigstens eine Welle und einen damit, insbesondere dreh- und/oder axialfest, verbundenen beschaufelten Turbinenrotor auf.

Dieser ist in einer Ausführung stromabwärtig einer Brennkammer der Gasturbine angeordnet und/oder setzt Enthalpie eines Arbeitsgases der Gasturbine in Arbeit, insbesondere zum Antrieb wenigstens einer Verdichterstufe und/oder eines Fans der Gasturbine, um bzw. ist hierzu vorgesehen bzw. eingerichtet. Erfindungsgemäß ist er ein Niederdruckturbinenrotor, insbesondere ein gasturbinenaustrittsnächster bzw. stromabwärtigster Turbinenrotor.

Der Turbinenrotor weist in einer Ausführung einen ersten Rotorabschnitt auf, der seinerseits ein stromabwärtigstes bzw. letztes bzw. hinterstes bzw. einem Turbinen(rotor)austritt nächstes Laufgitter des beschaufelten Turbinenrotors aufweist. In einer Ausführung weist der erste Rotorabschnitt noch ein oder mehrere in axialer Richtung beabstandete weitere Laufgitter auf, das bzw. die stromaufwärtig des stromabwärtigsten Laufgitters angeordnet sind.

Der Turbinenrotor weist in einer Ausführung einen dem ersten Rotorabschnitt axial stromaufwärtig benachbarten bzw. hieran angrenzenden zweiten Rotorabschnitt auf, der seinerseits ein oder mehrere in axialer Richtung beabstandete zweite Laufgitter des Turbinenrotors aufweist.

Der erste und zweite Rotorabschnitt können insbesondere durch ein gemeinsames, drittes Laufgitter voneinander getrennt bzw. definiert sein.

Ein oder mehrere Laufgitter des beschaufelten Turbinenrotors, insbesondere das stromabwärtigste und/oder ein oder mehrere weitere Laufgitter des ersten Rotorabschnitts und/oder das bzw. die zweiten Laufgitter des zweiten Rotorabschnitts und/oder das dritte Laufgitter sind in einer Ausführung in einem, insbesondere gemeinsamen, Strömungskanal angeordnet, der, insbesondere in radialer Richtung radial innen, wenigstens teilweise durch den Turbinenrotor, insbesondere Plattformen seines bzw. seiner Laufgitter, begrenzt bzw. definiert sein kann.

Die axiale Richtung ist in einer Ausführung parallel zu einer Drehachse der drehbar gelagerten Welle, die radiale Richtung entsprechend senkrecht hierzu. Angaben "stromauf-/abwärtig(s)t" beziehen sich insbesondere auf eine (Referenz-)Durchströmungsrichtung des Strömungskanals bzw. der Laufgitter von einem Gasturbinen- bzw. Turbinenrotoreintritt zu einem Gasturbinen- bzw. Turbinenrotoraustritt. Entsprechend ist ein stromabwärtiges bzw. stromabwärtig angeordnetes Merkmal in einer Ausführung ein gasturbinen- bzw. turbinenrotoraustrittsseitiges Merkmal bzw. in axialer Richtung einem Austritt des Turbinenrotors bzw. der Gasturbine näher, ein stromaufwärtiges bzw. stromaufwärtig angeordnetes Merkmal entsprechend ein gasturbinen- bzw. turbinenrotoreintrittsseitiges Merkmal bzw. in axialer Richtung einem Eintritt des Turbinenrotors bzw. der Gasturbine näher.

Der erste Rotorabschnitt begrenzt bzw. definiert in einer Ausführung einen ersten Raum in radialer Richtung radial (von) außen, der mit einer in der Welle angeordneten, insbesondere ausgebildeten, ersten Gaspassage, insbesondere einem ersten Strömungskanal, kommuniziert bzw. strömungstechnisch verbunden ist.

Der zweite Rotorabschnitt begrenzt bzw. definiert in einer Ausführung einen dem ersten Raum axial benachbarten zweiten Raum in radialer Richtung (von) radial außen, der mit einer von der ersten Gaspassage verschiedenen, insbesondere strömungstechnisch bzw. baulich getrennten, zweiten Gaspassage, insbesondere einem zweiten Strömungskanal, kommuniziert bzw. strömungstechnisch verbunden ist. In einer Ausführung ist der zweite Raum strömungstechnisch bzw. baulich von dem ersten Raum getrennt.

In einer Ausführung weist der erste Rotorabschnitt eine oder mehrere erste Austrittsöffnungen für den Austritt von Gas stromaufwärts des stromabwärtigsten Laufgitters aus dem ersten Raum, insbesondere in den Strömungskanal, auf, insbesondere für den Austritt von Gas aus dem ersten Raum stromaufwärts und/oder stromabwärts eines oder mehrerer weiterer Laufgitter des ersten Rotorabschnitts und/oder stromabwärts des dritten Laufgitters, insbesondere zwischen dem stromabwärtigsten Laufgitter und einem diesem axial benachbarten weiteren Laufgitter des ersten Rotorabschnitts und/oder zwischen zwei axial benachbarten weiteren Laufgittern des ersten Rotorabschnitts und/oder zwischen dem dritten Laufgitter und dem stromabwärtigsten Laufgitter oder einem weiteren Laufgitter des ersten Rotorabschnitts. Bei den ersten Austrittsöffnungen kann es sich zum Beispiel um Bohrungen handeln. Hierdurch kann in einer Ausführung vorteilhaft Gas aus der ersten Gaspassage, welches vorteilhafterweise die Welle kühlen kann, vor dem stromabwärtigsten Laufgitter in den Strömungskanal eingeleitet werden und dort Arbeit verrichten. Zusätzlich oder alternativ kann hierdurch in einer Ausführung vorteilhaft ein Gegendruck durch stromabwärts des Turbinenrotors bzw. seines stromabwärtigsten Laufgitters austretenden Gas reduziert, insbesondere vermieden werden. Zusätzlich oder alternativ kann hierdurch das der jeweiligen Austrittsöffnung stromabwärtig benachbarte Laufgitter, insbesondere dessen Schaufelbefestigung, vorteilhaft gekühlt werden.

Erfindungsgemäß ist der erste Raum in axialer Richtung stromabwärtig durch eine (turbinen)rotorfeste Abdeckung begrenzt bzw. definiert, die in radialer Richtung eine stromabwärtige Stirnseite der Welle vollständig oder teilweise, insbesondere auf wenigstens 80% ihrer Stirnfläche, übergreift bzw. -deckt, insbesondere von radial außen.

Hierdurch kann in einer Ausführung Gas vorteilhaft in den ersten Raum und/oder in dem ersten Raum vorteilhaft geführt werden.

In einer Ausführung ist die Abdeckung lösbar, insbesondere reib- und/oder formschlüssig, an dem Turbinenrotor befestigt. Hierdurch kann in einer Ausführung die Montage verbessert werden.

In einer Ausführung weist die Abdeckung eine, insbesondere zentrale bzw. mittige, Austritts- und/oder Montageöffnung auf. Hierdurch kann in einer Ausführung Strömung im ersten Raum und/oder die Montage verbessert werden. In einer anderen Ausführung ist die Abdeckung geschlossen.

In einer Ausführung kommuniziert die erste Gaspassage über eine, insbesondere zentrale, oder mehrere Wellen-Austrittsöffnungen in einer stromabwärtigen Stirnseite der Welle mit dem ersten Raum bzw. ist hierdurch strömungstechnisch mit dem ersten Raum verbunden. Hierdurch kann in einer Ausführung Gas vorteilhaft in den ersten Raum geführt werden.

In einer Ausführung ist der erste Raum in axialer Richtung stromaufwärtig durch einen Rotorkonus begrenzt, insbesondere von den zweiten Raum getrennt, der den Turbinenrotor mit der Welle verbindet und sich entgegen einer bzw. der Durchströmungsrichtung des Turbinenrotors aufweitet bzw. in Durchströmungsrichtung radial konvergiert. Wie vorstehend ausgeführt, ist die Durchströmungsrichtung axial von einem Gasturbinen- bzw. Turbinenrotoreintritt zu einem Gasturbinen- bzw. Turbinenrotoraustritt.

Hierdurch kann sich in einer Ausführung der erste Raum in radialer Richtung nach außen stromaufwärts vergrößern, so dass insbesondere vorteilhaft auch ein oder mehrere weitere Laufgitter des ersten Rotorabschnitts mit dem Gas aus der ersten Gaspassage beschickt werden können.

In einer Ausführung weist der zweite Rotorabschnitt eine oder mehrere zweite Austrittsöffnungen für den Austritt von Gas stromaufwärts und/oder stromabwärts eines oder mehrerer zweiter Laufgitter und/oder stromaufwärts des dritten Laufgitters aus dem zweiten Raum auf, insbesondere für den Austritt von Gas aus dem zweiten Raum in den Strömungskanal zwischen zwei axial benachbarten zweiten Laufgittern des zweiten Rotorabschnitts und/oder zwischen einem zweiten Laufgitter des zweiten Rotorabschnitts und dem dritten Laufgitter. Bei den zweiten Austrittsöffnungen kann es sich zum Beispiel um einen umlaufenden Ringspalt oder aber auch um Bohrungen handeln.

Hierdurch kann in einer Ausführung vorteilhaft Gas aus der zweiten Gaspassage vor wenigstens einem zweiten Laufgitter in den Strömungskanal eingeleitet werden und dort Arbeit verrichten. Zusätzlich oder alternativ kann hierdurch das der jeweiligen Austrittsöffnung stromabwärtig benachbarte Laufgitter, insbesondere dessen Schaufelbefestigung, vorteilhaft gekühlt werden.

In einer Ausführung kommuniziert die erste Gaspassage mit einer ersten Druckquelle, insbesondere einer ersten Verdichterstufe der Gasturbine, bzw. ist mit dieser strömungstechnisch verbunden, und die zweite Gaspassage kommuniziert mit einer zweiten Druckquelle, insbesondere einer zweiten Verdichterstufe der Gasturbine, bzw. ist mit dieser strömungstechnisch verbunden, wobei diese zweite Druckquelle einen höheren Druck aufweist bzw. liefert als die erste Druckquelle bzw. hierzu vorgesehen bzw. eingerichtet ist. Die erste Verdichterstufe kann insbesondere ein Niederdruckverdichter bzw. ein Teil eines Niederdruckverdichters sein, die Welle entsprechend insbesondere eine Niederdruckturbinenwelle, Hierdurch kann in einer Ausführung vorteilhaft den unterschiedlichen Druckniveaus des ersten und zweiten Rotorabschnitts des Turbinenrotors Rechnung getragen werden.

Alternativ ist es auch natürlich möglich, dass die erste Gaspassage und die zweite Gaspassage mit derselben Druckquelle, insbesondere einer Verdichterstufe der Gasturbine, kommunizieren bzw. mit dieser strömungstechnisch verbunden sind, wobei dann jedoch eine erste Versorgungsleitung, die die erste Gaspassage mit der gemeinsamen Druckquelle verbindet, derart ausgebildet ist, dass es in dieser zu einem größeren Druckverlust kommt als in einer zweiten Versorgungsleitung, welche die zweite Gaspassage mit der gemeinsamen Druckquelle verbindet. Auch auf diese Weise wird sichergestellt, dass im Betrieb der Gasturbine der Druck in der zweiten Gaspassage größer ist als in der ersten Gaspassage.

In einer Ausführung beträgt ein Anteil einer rotorfesten bzw. zu dem Turbinenrotor drehfeste Begrenzungsfläche des ersten Raums zu einer Gesamtbegrenzungsfläche des ersten Raums wenigstens 80%, insbesondere wenigstens 90%, insbesondere kann der erste Raum vollständig rotorfest begrenzt bzw. definiert sein, insbesondere durch den ersten Rotorabschnitt, die rotorfeste Abdeckung, den Rotorkonus und/oder die mit dem Turbinenrotor verbundene Welle, insbesondere deren stromabwärtige Stirnseite und/oder einen diesem benachbarten Außenflächenabschnitt der Welle. Hierdurch kann in einer Ausführung Gas vorteilhaft in dem ersten Raum geführt werden.

Nach einem Aspekt der vorliegenden Erfindung wird zum Betreiben einer hier beschriebenen Gasturbine bzw. während deren Betrieb der erste Raum durch die erste Gaspassage mit einem ersten Gas-, insbesondere (Kühl)Luftstrom und der zweite Raum durch die zweite Gaspassage mit einem zweiten Gas-, insbesondere (Kühl)Luftstrom versorgt.

In einer Ausführung treten in wenigstens einem Betriebszustand, insbesondere einem Auslegungs- und/oder einem Maximallastbetriebszustand, wenigstens 80% des ersten Gasstroms durch die ersten Austrittsöfthungen aus dem ersten Raum aus. Hierdurch kann in einer Ausführung vorteilhaft ein großer Gasanteil aus der ersten Gaspassage, insbesondere nach Kühlung der Welle, Arbeit an einem oder mehreren Laufgittern des ersten Rotorabschnitts verrichten. Zusätzlich oder alternativ kann hierdurch in einer Ausführung vorteilhaft ein Gegendruck durch stromabwärts des Turbinenrotors bzw. seines stromabwärtigsten Laufgitters austretenden Gas reduziert, insbesondere vermieden werden. Zusätzlich oder alternativ kann hierdurch das der jeweiligen Austrittsöffnung stromabwärtig benachbarte Laufgitter, insbesondere dessen Schaufelbefestigung, vorteilhaft gekühlt werden.

In einer Ausführung weist der erste Raum in wenigstens einem Betriebszustand, insbesondere einem Auslegungs- und/oder einem Maximallastbetriebszustand, einen ersten Gasdruck und der zweite Raum einen zweiten Gasdruck auf, der wenigstens 50 kPa, insbesondere 100 kPa, höher als der erste Gasdruck ist und/oder der wenigstens 400 kPa beträgt. Hierdurch kann in einer Ausführung vorteilhaft den unterschiedlichen Druckniveaus des ersten und zweiten Rotorabschnitts des Turbinenrotors Rechnung getragen werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

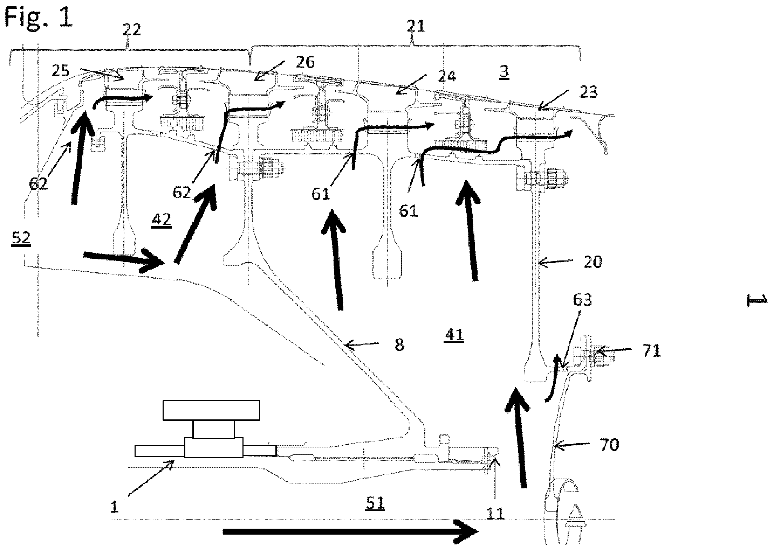

- Fig. 1: einen Teil einer Gasturbine nach einer Ausführung der vorliegenden Erfindung.

Fig. 1 zeigt einen Teil einer Gasturbine nach einer Ausführung der vorliegenden Erfindung in einem Axialschnitt.

Die Gasturbine weist eine Welle 1 und einen damit dreh- und axialfest verbundenen beschaufelten Turbinenrotor 20 auf.

Der Turbinenrotor 20 weist einen ersten Rotorabschnitt 21 auf, der ein stromabwärtigstes Laufgitter 23 sowie ein in axialer Richtung (horizontal in Fig. 1) beabstandetes weiteres Laufgitter 24 aufweist, das stromaufwärtig (links in Fig. 1) des stromabwärtigsten Laufgitters 23 angeordnet ist.

Der Turbinenrotor 20 weist einen dem ersten Rotorabschnitt 21 axial stromaufwärtig (links in Fig. 1) benachbarten bzw. hieran angrenzenden zweiten Rotorabschnitt 22 auf, der seinerseits wenigstens ein zweites Laufgitter 25 des Turbinenrotors aufweist.

Der erste und zweite Rotorabschnitt sind durch ein gemeinsames drittes Laufgitter 26 voneinander getrennt.

Die Laufgitter 23-26 des beschaufelten Turbinenrotors sind in einem gemeinsamen Strömungskanal 3 angeordnet, der in radialer Richtung (vertikal in Fig. 1) radial innen wenigstens teilweise durch den Turbinenrotor begrenzt ist.

Der erste Rotorabschnitt 21 begrenzt einen ersten Raum 41 in radialer Richtung radial von außen (oben in Fig. 1), der mit einer ersten Gaspassage in Form eines in der Welle 1 ausgebildeten ersten Strömungskanals 51 kommuniziert bzw. strömungstechnisch verbunden ist.

Der zweite Rotorabschnitt 22 begrenzt einen dem ersten Raum 41 axial benachbarten zweiten Raum 42 in radialer Richtung von radial außen, der mit einer von der ersten Gaspassage 51 strömungstechnisch getrennten zweiten Gaspassage 52 strömungstechnisch kommuniziert.

Der erste Rotorabschnitt 21 weist mehrere erste Austrittsöffnungen 61 für den Austritt von Gas aus dem ersten Raum 41 in den Strömungskanal 3 zwischen dem stromabwärtigsten Laufgitter 23 und dem diesem axial benachbarten weiteren Laufgitter 24 sowie zwischen diesem weiteren Laufgitter 24 und dem dritten Laufgitter 26 auf.

Der erste Raum 41 ist in axialer Richtung stromabwärtig (rechts in Fig. 1) durch eine turbinenrotorfeste Abdeckung 70 begrenzt, die in radialer Richtung eine stromabwärtige Stirnseite (rechts in Fig. 1) der Welle 1 auf wenigstens 80% ihrer Stirnfläche von radial außen übergreift bzw. -deckt.

Die Abdeckung 70 ist durch Schrauben 71 lösbar reibschlüssig an dem Turbinenrotor 20 befestigt.

Die erste Gaspassage 51 kommuniziert strömungstechnisch über eine zentrale Wellen-Austrittsöffnung 11 in einer stromabwärtigen (in Fig. 1 rechten) Stirnseite der Welle 1 mit dem ersten Raum 41.

Der erste Raum 41 ist in axialer Richtung stromaufwärtig (links in Fig. 1) durch einen Rotorkonus 8 begrenzt und von dem zweiten Raum 42 strömungstechnisch und baulich getrennt. Der Rotorkonus 8 verbindet den Turbinenrotor 20 mit der Welle 1 und weitet sich entgegen einer Durchströmungsrichtung axial von einem Gasturbinen- bzw. Turbinenrotoreintritt zu einem Gasturbinen- bzw. Turbinenrotoraustritt (von links nach rechts in Fig. 1) des Turbinenrotors auf (d.h. konvergiert in Fig. 1 nach rechts radial).

Der zweite Rotorabschnitt 22 weist mehrere zweite Austrittsöffnungen 62 für den Austritt von Gas stromaufwärts des zweiten Laufgitters 25 und zwischen diesem zweiten Laufgitter 25 und dem dritten Laufgitter 26 auf.

Die erste Gaspassage 51 kommuniziert strömungstechnisch mit ersten Verdichterstufe der Gasturbine, die zweite Gaspassage 52 mit einer zweiten Verdichterstufe der Gasturbine (nicht dargestellt), die einen höheren Druck aufweist bzw. liefert als die erste Verdichterstufe.

Der erste Raum 41 ist vollständig rotorfest durch den ersten Rotorabschnitt 21, die rotorfeste Abdeckung 70, den Rotorkonus 8 und die mit dem Turbinenrotor 20 verbundene Welle 1 begrenzt, so dass ein Anteil einer rotorfesten Begrenzungsfläche des ersten Raums 41 zu seiner Gesamtbegrenzungsfläche 100% beträgt.

Während dem Betrieb wird der erste Raum 41 durch die erste Gaspassage 51 mit einem ersten Kühlluftstrom, der durch die ersten Austrittsöffnungen 61 und eine Entlüftung 63 aus diesem austritt, und der zweite Raum 42 durch die zweite Gaspassage 52 mit einem zweiten Kühlluftstrom versorgt, der durch die zweiten Austrittsöffnungen 62 aus diesem austritt, wie durch Strömungspfeile in Fig. 1 schematisiert angedeutet. Dabei treten wenigstens 80% des ersten Gasstroms durch die ersten Austrittsöffnungen 61 aus dem ersten Raum 41 aus.

Der erste Raum 41 weist in einem Betriebspunkt einen ersten Gasdruck von etwa 350 kPa und der zweite Raum einen zweiten Gasdruck von etwa 450 kPa auf.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Welle
- 11: Wellen-Austrittsöffnung
- 20: Turbinenrotor
- 21: erster Rotorabschnitt
- 22: zweiter Rotorabschnitt
- 23: stromabwärtigstes Laufgitter
- 24: weiteres Laufgitter des ersten Rotorabschnitts
- 25: zweites Laufgitter
- 26: drittes Laufgitter
- 3: Strömungskanal
- 41: erster Raum
- 42: zweiter Raum
- 51: erste Gaspassage
- 52: zweite Gaspassage
- 61: erste Austrittsöffnung
- 62: zweite Austrittsöffnung
- 63: Entlüftung
- 70: Abdeckung
- 71: Schrauben
- 8: Rotorkonus

## Patentansprüche

1. Gasturbine, insbesondere Flugtriebwerk-Gasturbine, mit einer Welle (1) und einem damit verbundenen beschaufelten Turbinenrotor (20), der einen ersten Rotorabschnitt (21),
der ein stromabwärtigstes Laufgitter (23) des Turbinenrotors aufweist und einen ersten Raum (41) in radialer Richtung begrenzt, welcher mit einer in der Welle (1) angeordneten ersten Gaspassage (51) kommuniziert, und
einen dem ersten Rotorabschnitt (21) axial benachbarten zweiten Rotorabschnitt (22) aufweist,
der wenigstens ein zweites Laufgitter (25) des Turbinenrotors aufweist und einen dem ersten Raum (41) axial benachbarten zweiten Raum (42) in radialer Richtung begrenzt, welcher mit einer zweiten Gaspassage (52) kommuniziert,
wobei der erste Rotorabschnitt (21) wenigstens eine erste Austrittsöffnung (61) für den Austritt von Gas stromaufwärts des stromabwärtigsten Laufgitters (23) aus dem ersten Raum (41) aufweist,
**dadurch gekennzeichnet, dass** der Turbinenrotor (20) ein Niederdruckturbinenrotor der Gasturbine ist, und dass der erste Raum (41) in axialer Richtung stromabwärtig durch eine rotorfeste Abdeckung (70) begrenzt ist, die in radialer Richtung eine stromabwärtige Stirnseite der Welle (1) wenigstens teilweise übergreift,

2. Gasturbine nach dem vorhergehenden Anspruch, **dadurch gekennzeichnet, dass** die Abdeckung (70) lösbar (71) an dem Turbinenrotor (20) befestigt ist.

3. Gasturbine nach einem der vorhergehenden Ansprüche, **dadurch gekennzeichnet, dass** die erste Gaspassage (51) über wenigstens eine Wellen-Austrittsöffnung (11) in einer stromabwärtigen Stirnseite der Welle (1) mit dem ersten Raum (41) kommuniziert.

4. Gasturbine nach einem der vorhergehenden Ansprüche, **dadurch gekennzeichnet, dass** der erste Raum (41) in axialer Richtung stromaufwärtig durch einen Rotorkonus (8) begrenzt ist, der den Turbinenrotor (20) mit der Welle (1) verbindet und sich entgegen einer Durchströmungsrichtung von einem Eintritt zu einem Austritt des Turbinenrotors aufweitet.

5. Gasturbine nach einem der vorhergehenden Ansprüche, **dadurch gekennzeichnet, dass** der erste Rotorabschnitt (21) wenigstens ein weiteres Laufgitter (24) des Turbinenrotors und wenigstens eine erste Austrittsöffnung (61) für den Austritt von Gas stromaufwärts und/oder stromabwärts des weiteren Laufgitters (24) aus dem ersten Raum (41) aufweist.

6. Gasturbine nach einem der vorhergehenden Ansprüche, **dadurch gekennzeichnet, dass** der zweite Rotorabschnitt (22) wenigstens eine zweite Austrittsöffnung (62) für den Austritt von Gas stromaufwärts und/oder stromabwärts des zweiten Laufgitters (25) aus dem zweiten Raum (42) aufweist.

7. Gasturbine nach einem der vorhergehenden Ansprüche, **dadurch gekennzeichnet, dass** die erste Gaspassage (51) mit einer ersten Druckquelle, insbesondere einer ersten Verdichterstufe der Gasturbine, und die zweite Gaspassage (52) mit einer zweiten Druckquelle, insbesondere einer zweiten Verdichterstufe der Gasturbine kommuniziert, die einen höheren Druck aufweist als die erste Druckquelle.

8. Gasturbine nach einem der vorhergehenden Ansprüche, **dadurch gekennzeichnet, dass** ein Anteil einer rotorfesten zu einer Gesamtbegrenzungsfläche des ersten Raums (41) wenigstens 80% beträgt.

9. Verfahren zum Betreiben einer Gasturbine nach einem der vorhergehenden Ansprüche, **dadurch gekennzeichnet, dass** der erste Raum (41) durch die erste Gaspassage (51) mit einem ersten Gasstrom und der zweite Raum (42) durch die zweite Gaspassage (52) mit einem zweiten Gasstrom versorgt wird.

10. Verfahren nach dem vorhergehenden Anspruch, **dadurch gekennzeichnet, dass** wenigstens 80% des ersten Gasstroms durch die ersten Austrittsöffnungen (61) aus dem ersten Raum (41) austreten.

11. Verfahren nach einem der beiden vorhergehenden Ansprüche, **dadurch gekennzeichnet, dass** der erste Raum (41) einen ersten Gasdruck und der zweite Raum (42) einen zweiten Gasdruck aufweist, der wenigstens 50 kPa höher als der erste Gasdruck ist und/oder wenigstens 400 kPa beträgt.

## Claims

1. Gas turbine, in particular an aircraft engine gas turbine, comprising a shaft (1) and a bladed turbine rotor (20) connected thereto, which rotor comprises a first rotor portion (21), which has a downstream-most rotor blade (23) of the turbine rotor and delimits a first chamber (41) in the radial direction, which chamber communicates with a first gas passage (51) arranged in the shaft (1), and
a second rotor portion (22) that is axially adjacent to the first rotor portion (21), which second rotor portion has at least one second rotor blade (25) of the turbine rotor and delimits, in the radial direction, a second chamber (42) that is axially adjacent to the first chamber (41) and that communicates with a second gas passage (52),
the first rotor portion (21) comprising at least one first outlet opening (61) for discharging gas out of the first chamber (41) upstream of the downstream-most rotor blade (23), **characterized in that** the turbine rotor (20) is a low-pressure turbine rotor of the gas turbine, and **in that** the first chamber (41) is delimited downstream in the axial direction by a cover (70) that is fixed to the rotor and that overlaps a downstream end face of the shaft (1) at least in part in the radial direction.

2. Gas turbine according to the preceding claim, **characterized in that** the cover (70) is detachably (71) connected to the turbine rotor (20).

3. Gas turbine according to either of the preceding claims, **characterized in that** the first gas passage (51) communicates with the first chamber (41) via at least one shaft outlet opening (11) in a downstream end face of the shaft (1).

4. Gas turbine according to any of the preceding claims, **characterized in that** the first chamber (41) is delimited upstream in the axial direction by a rotor cone (8), which connects the turbine rotor (20) to the shaft (1) and widens from an inlet to an outlet of the turbine rotor counter to a direction of flow.

5. Gas turbine according to any of the preceding claims, **characterized in that** the first rotor portion (21) comprises at least one additional rotor blade (24) of the turbine rotor and at least one first outlet opening (61) for discharging gas out of the first chamber (41) upstream and/or downstream of the additional rotor blade (24).

6. Gas turbine according to any of the preceding claims, **characterized in that** the second rotor portion (22) comprises at least one second outlet opening (62) for discharging gas out of the second chamber (42) upstream and/or downstream of the second rotor blade (25).

7. Gas turbine according to any of the preceding claims, **characterized in that** the first gas passage (51) communicates with a first pressure source, in particular a first compressor stage of the gas turbine, and the second gas passage (52) communicates with a second pressure source, in particular a second compressor stage of the gas turbine, that has a higher pressure than the first pressure source.

8. Gas turbine according to any of the preceding claims, **characterized in that** a proportion of a delimiting surface of the first chamber (41) that is fixed with respect to the rotor relative to a total delimiting surface of said chamber is at least 80%.

9. Method for operating a gas turbine according to any of the preceding claims, **characterized in that** the first chamber (41) is supplied with a first gas flow by the first gas passage (51) and the second chamber (42) is supplied with a second gas glow by the second gas passage (52).

10. Method according to the preceding claim, **characterized in that** at least 80% of the first gas flow is discharged from the first chamber (41) through the first outlet openings (61).

11. Method according to either of the two preceding claims, **characterized in that** the first chamber (41) has a first gas pressure and the second chamber (42) has a second gas pressure that is at least 50 kPa higher than the first gas pressure and/or is at least 400 kPa.

## Revendications

1. Turbine à gaz, en particulier turbine à gaz de réacteur d'avion, comprenant un arbre (1) et un rotor à aubage (20) qui est raccordé audit arbre et qui comporte une première section de rotor (21) qui comporte une grille de passage (23), côté aval, du rotor de turbine et qui délimite dans la direction radiale un premier espace (41) qui communique avec un premier passage de gaz (51) ménagé dans l'arbre (1), et
une deuxième section de rotor (22) axialement voisine de la première section de rotor (21) qui comporte au moins une deuxième grille de passage (25) du rotor de turbine et qui délimite dans la direction radiale un deuxième espace (42), axialement voisin du premier espace (41), qui communique avec un deuxième passage de gaz (52), la première section de rotor (21) comportant au moins un premier orifice de sortie (61) destinée à la sortie de gaz, en amont de la grille de passage (23) côté aval, du premier espace (41),
**caractérisée en ce que** le rotor de turbine (20) est un rotor de turbine à basse pression de la turbine à gaz, et **en ce que** le premier espace (41) est, côté aval dans la direction axiale, délimité par un recouvrement (70) solidaire du rotor qui recouvre au moins partiellement un côté frontal, côté aval, de l'arbre (1) dans la direction radiale.

2. Turbine à gaz selon la revendication précédente, **caractérisée en ce que** le recouvrement (70) est fixé de façon amovible (71) au rotor de turbine (20).

3. Turbine à gaz selon l'une des revendications précédentes, **caractérisée en ce que** le premier passage de gaz (51) communique avec le premier espace (41) par le biais d'au moins un orifice de sortie d'arbre (11) ménagé dans un côté frontal, côté aval, de l'arbre (1).

4. Turbine à gaz selon l'une des revendications précédentes, **caractérisée en ce que** le premier espace (41) est délimité, côté amont dans la direction axiale, par un cône de rotor (8) qui raccorde le rotor de turbine (20) à l'arbre (1) et qui s'élargit depuis une entrée vers une sortie du rotor de turbine à l'opposé de la direction de circulation du flux.

5. Turbine à gaz selon l'une des revendications précédentes, **caractérisée en ce que** la première section de rotor (21) comporte au moins une autre grille de passage (24) du rotor de turbine et au moins un premier orifice de sortie (61) destinée à la sortie de gaz, en amont et/ou en aval de l'autre grille de passage (24), du premier espace (41).

6. Turbine à gaz selon l'une des revendications précédentes, **caractérisée en ce que** la deuxième section de rotor (22) comprend au moins un deuxième orifice de sortie (62) destiné à la sortie de gaz, en amont et/ou en aval de la deuxième grille de passage (25), du deuxième espace (42).

7. Turbine à gaz selon l'une des revendications précédentes, **caractérisée en ce que** le premier passage de gaz (51) communique avec une première source de pression, en particulier un premier étage de compresseur de la turbine à gaz, et le deuxième passage de gaz (52) communique avec une deuxième source de pression, en particulier un deuxième étage de compresseur de la turbine à gaz, dont la pression plus élevée que celle de la première source de pression.

8. Turbine à gaz selon l'une des revendications précédentes, **caractérisée en ce que** la proportion d'une surface de limitation solidaire du rotor par rapport à une surface de limitation totale du premier espace (41) est au moins égale à 80 %.

9. Procédé de fonctionnement d'une turbine à gaz selon l'une des revendications précédentes, **caractérisé en ce que** le premier espace (41) est alimenté avec un premier flux de gaz par le premier passage de gaz (51), et le deuxième espace (42) est alimenté avec un deuxième flux de gaz par le deuxième passage de gaz (52).

10. Procédé selon la revendication précédente, **caractérisé en ce qu'**au moins 80 % du premier flux de gaz sortent du premier espace (41) par les premiers orifices de sortie (61).

11. Procédé selon l'une des deux revendications précédentes, **caractérisé en ce que** le premier espace (41) est à une première pression de gaz, et le deuxième espace (42) est à une deuxième pression de gaz qui est au moins supérieure de 50 kPa à la première pression de gaz et/ou est au moins égale à 400 kPa.
